# FASCICULE DE BREVET EUROPEEN

(11) **EP 0 786 944 B1**
(45) Date de publication et mention de la délivrance du brevet: **12.08.1998**
(21) Numéro de dépôt: 95933576.1
(22) Date de dépôt: 23.10.1995
(51) Int. Cl.: A23K 1/16, A23K 1/18

(54) **COMPOSITION D'ADDITIF POUR ALIMENTS DESTINES A LA VOLAILLE**
GEFLÜGELFUTTERZUSATZZUSAMMENSETZUNG
POULTRY FEED ADDITIVE COMPOSITION

(30) Priorité: 26.10.1994 CH 3203/94
(43) Date de publication de la demande: 06.08.1997
(73) Titulaire: CRINA S.A., CH-1196 Gland (CH)
(72) Inventeur: ROSSI, Jean, CH-1293 Bellevue (CH)
(74) Mandataire: Micheli & Cie
(86) Numéro de dépôt international: IB9500900
(87) Numéro de publication internationale: WO9613175

(56) Documents cités:
- EP-A- 0 303 764
- EP-A- 0 391 886
- EP-A- 0 646 321
- FR-A- 2 502 905
- GB-A- 892 855
- GB-A- 2 118 420
- US-A- 3 171 745
- US-A- 4 022 911
- US-A- 4 921 705
- DATABASE WPI Week 6700 Derwent Publications Ltd., London, GB; AN 67-05549G & SU,A,174 335 (KUL'BAKH VO) , 1968
- DATABASE WPI Week 8838 Derwent Publications Ltd., London, GB; AN 88-268226 & JP,A,63 196 514 (TAKEDA CHEMICAL IND KK) , 15 Août 1988
- AVAIAN DISEASES, vol. 38, no. 2, 1994 pages 329-333, A.P. MCELROY ET AL. 'Effect of prolonged administration of dietary capsaicin on broiler growth and Salmonella enteritidis susceptibility'

## Description

La présente invention se rapporte à une composition d'additif non médicamenteuse pour aliments destinés à la volaille, ainsi qu'à l'utilisation de cette composition simultanément pour améliorer la digestibilité des aliments dans lesquels elle est incorporée et pour réduire les effets négatifs de la coccidiose chez la volaille.

La coccidiose est une maladie notamment de la volaille due à l'infection provoquée par une ou plusieurs espèces de coccidies ou protozoaires de grande taille de type sporozoa. Ces protozoaires, fréquents dans tous les élevages de volaille, sont ingérés par les animaux sous forme d'oocystes sporulés. Ils subissent alors dans le tube digestif des animaux un cycle de développement et de multiplication tel, qu'à partir de quelques oocystes sporulés, sont excrétés dans les matières fécales des millions d'oocystes non sporulés. Les oocystes non sporulés, non infectieux, sont transformés lors de leur séjour dans les matières fécales après excrétion, donc dans la litière, en oocystes sporulés, infectieux. Mais, seule une partie des oocystes non sporulés est transformée en oocystes sporulés; or, l'intensité de la sporulation dépend de la composition des matières fécales: teneur en humidité, teneur en oxygène, pH, etc. Si la sporulation est intense, les animaux réinfectés périssent ou voient leur croissance et leur production très réduites. Si la sporulation est modérée, les animaux ne souffrent que d'une légère infection et sont ainsi à même de développer une immunité.

Le document US-A-4022911 décrit le traitement de volaille contre les coccidies oocystes à l'aide d'une composition comprenant, entre autres, crésols. Le document Database WPI, Week 6700, Derwent Publications Ltd., London, GB,AN 88-268226 décrit le traitment doiseux contre le coccidies oocystes à l'aide d'une composition comprenant thymol.

Le but de la présente invention consiste donc à fournir une composition d'additif destinée à être incorporée dans des aliments pour volaille qui ne soit pas médicamenteuse, donc qui n'agisse pas par une action microbicide sur les coccidies, mais au contraire dont l'efficacité soit basée sur une amélioration de la digestibilité des aliments, afin de modifier la composition des matières fécales de telle sorte que la sporulation des oocystes s'en trouve réduite et la réinfection pathogène pratiquement supprimée.

Or, le présent inventeur a pu montrer qu'un mélange de plusieurs composés chimiques présents dans différents organes de plantes, donc d'origine naturelle, utilisés en synergie et en combinaison avec un agent émulsifiant tensioactif approprié, présentait de manière tout à fait inattendue les effets recherchés par la présente invention pour améliorer la digestibilité des aliments pour volaille et simultanément pour réduire de façon significative les effets négatifs de la coccidiose chez la volaille.

Ainsi, la composition d'additif alimentaire, objet de l'invention et visant à atteindre le but précité, comporte un mélange de composés actifs d'origine végétale comprenant au moins des crésols, guaïacol, thymol, anéthol, eugénol, capsaïcine et tanin, en combinaison avec un agent émulsifiant tensioactif.

De préférence, la composition selon l'invention peut comporter de 1 à 5 mg/kg d'aliment de crésols, de 1 à 5 mg/kg de guaïacol, de 5 à 20 mg/kg de thymol, de 0,5 à 5 mg/kg d'anéthol, de 1 à 5 mg/kg d'eugénol, de 0,1 à 2 mg/kg de capsaïcine et de 1 à 20 mg/kg de tanin, ainsi que de 20 à 1000 mg/kg d'émulsifiant tensioactif.

L'agent émulsifiant peut être choisi avantageusement parmi ceux qui sont de nature plutôt hydrophile, par exemple les esters polyglycériques d'acides gras tels que de l'acide ricinoléique intersterifié, les huiles de ricin éthoxylées, les esters des acides gras du propylèneglycol, les saccharo-esters ou saccharo-glycérides, les stéaroyl-lactylates de sodium, potassium ou calcium, les polysorbates tels que monooléate ou ricinoléate de polyoxyéthylènesorbitan, le polyéthylène-glycol, le ricinoléate de glycéryl-polyéthylène-glycol, les lécithines, etc.

La composition d'additif alimentaire selon l'invention peut également comporter d'autres composés chimiques d'origine végétale, par exemple jusqu'à environ 0,5 mg/kg d'aliment de créosol, jusqu'à environ 2 mg/kg de déca-, undéca- et/ou dodécalactones, jusqu'à environ 2 mg/kg de ionones et/ou irone, jusqu'à environ 1 mg/kg de gingérol, jusqu'à environ 1 mg/kg de pipérine, jusqu'à 1 mg/kg de propylidène- et/ou butylidène-phtalides, jusqu'à environ 5 mg/kg de salicylate d'amyle et/ou de benzyle.

L'incorporation de la composition d'additif alimentaire selon l'invention à des aliments pour volaille est en pratique effectuée sous forme d'un mélange concentré ou prémix. Ainsi, un second objet de la présente invention consiste en un tel mélange concentré comportant le mélange de composés actifs d'origine naturelle en solution, par exemple dans du propylène-glycol, et l'agent émulsifiant tensioactif, sur un support comprenant des céréales, des éléments protéiniques et un composant minéral, ce support représentant de 30 à 90% dudit prémix.

Ce prémix peut contenir, par exemple pour être incorporé à une tonne d'aliments pour volaille, de 50 à 200 g de solution dans le propylène-glycol du mélange de composés actifs d'origine naturelle, de 20 à 1000 g d'agent émulsifiant, de 50 à 900 g de céréales et sous-produits, de 20 à 100 g de support protéique (poudre de lait, caséïne, etc) et de 50 à 300 g de composant minéral (silice expansée, chaux fourragère, phosphate bicalcique, etc).

Enfin, la présente invention a encore pour objets d'une part l'utilisation de la composition d'additif alimentaire pour améliorer la digestibilité des aliments pour volaille, et d'autre part un aliment pour volaille destiné à réduire les effets négatifs de la coccidiose et contenant à titre d'ingrédient actif la composition d'additif alimentaire définie précédemment.

La présente invention sera maintenant illustrée plus en détail en référence à l'Exemple ci-après.

### Exemple

### (1) Composition d'additif

Elle contient les composés suivants (pour 1 kg d'aliments pour volaille) :

### (a) composés actifs d'origine naturelle

| | |
|---|---|
| crésols | 1 mg |
| guaïacol | 2 |
| créosol | - |
| thymol | 6 |
| anéthol | 1 |
| eugénol | 2 |
| lactones (déca-,undéca, dodéca-) | 0 |
| ionones, irone | 0,2 |
| capsaïcine | 0,5 |
| gingérol | 0,1 |
| pipérine | 0,1 |
| phtalides | 0,5 |
| salicylates (d'amyle, de benzyle) | 2 |
| tanin | 2 |

### (b) émulsifiant tensioactif

ricinoléate de glycéryl-polyéthylène-glycol 100 mg

### (2) Prémix

Les composés actifs ci-dessus sont d'abord dissous dans du propylène-glycol (ad 100g), et un prémix ayant la composition suivante (par kg) est préparé, par exemple en mettant en oeuvre la technique décrite dans la demande de brevet EP 94115095.5 (de la même titulaire) :

| | |
|---|---|
| - solution propylène-glycol (composés actifs) | 100 g |
| - céréales et sous-produits | 550 |
| - support protéique (poudre de lait, caséine, etc) | 50 |
| - composant minéral (silice expansée, chaux fourragère, phosphate bicalcique | 200 |
| - émulsifiant | 100 |

### (3) Aliment pour volaille

Le prémix décrit ci-dessus sous (2) est incorporé a raison de 200g à 2 kg par tonne d'aliments pour volaille de type commercial, par exemple contenant notamment de l'orge, du blé, du tapioca, du soja, de la farine de viande, des graines et de la mélasse.

### (4) Effets obtenus chez la volaille

### (a) Mode opératoire

4 x 225 poussins d'un jour sont élevés au sol avec un aliment de type commercial. A l'âge de 5 jours, les animaux sont infectés par un mélange de coccidies incorporés à l'aliment pendant 24 heures.
1 groupe reçoit un aliment commercial non complémenté (contrôle -)
1 groupe reçoit le même aliment complémenté avec un coccidiocide commercial (contrôle +)
1 groupe reçoit le même aliment complémenté avec le prémix selon l'invention (2).

### (b) Résultats obtenus

On a déterminé les paramètres suivants sur les différents groupes : digestibilité de l'aliment, plus particulièrement proportion (en %) de protéine brute et de matières organiques effectivement digérées (différence entre les produits ingérés et ceux rejetés), consommation alimentaire, gain de poids et enfin taux de mortalité. Les résultats obtenus sont réunis dans le Tableau ci-après.

**Tableau**

| - Digestibilité de l'aliment : | Contr.(-) | Contr.(+) | Prémix (invention) |
|---|---|---|---|
| protéine brute | 52,7 | 83,0 | 82,0 |
| mat. organique | 55,1 | 85,1 | 83,7 |
| - Consommation alimentaire(g) | 1175 | 3112 | 2991 |
| - Gain de poids(g) | 430,5 | 1758 | 1608 |
| - Mortalité (%) | 86,8 | 2,8 | 9,6 |

Il ressort clairement de ce tableau que la composition d'additif selon l'invention, incorporé sous forme de prémix dans l'alimentation pour volaille permet d'obtenir une digestibilité équivalente à celle obtenue avec un traitement de type thérapeutique au moyen d'un coccidiocide du commerce (différence non statistiquement significative entre les groupes "contrôle (+)" et "prémix-invention").

En ce qui concerne l'effet de diminution du taux de mortalité, le fait que le résultat obtenu avec le prémix selon l'invention soit très significatif par rapport au "contrôle (-)", mais néanmoins légèrement moindre par rapport au "contrôle (+)" démontre que la composition d'additif selon l'invention n'a pas d'effet microbicide analogue au coccidiocide utilisé dans le groupe de "contrôle (+)", lequel tue les oocystes sporulés avant leur développement dans l'organisme. Par contre, grâce à la présente invention, la réinfestation après le premier passage de coccidies dans le tractus digestif est pratiquement bloquée, d'où diminution nette de la mortalité totale, meilleure croissance des animaux et meilleure consommation alimentaire.

## Revendications

1. Composition d'additif alimentaire non médicamenteuse pour volaille, comportant un mélange de crésols, guaïacol, thymol, anéthol, eugénol, capsaïcine et tanin, en combinaison avec un agent émulsifiant tensioactif.

2. Composition selon la revendication 1 comportant de 1 à 5 mg/kg d'aliment de crésols, de 1 à 5 mg/kg de guaïacol, de 5 à 20 mg/kg de thymol, de 0,5 à 5 mg/kg d'anéthol, de 1 à 5 mg/kg d'eugénol, de 0,1 à 2 mg/kg de capsaïcine et de 1 à 20 mg/kg de tanin, ainsi que de 20 à 1000 mg/kg d'émulsifiant tensioactif.

3. Composition selon la revendication 2 comportant en outre jusqu'à environ 0,5 mg/kg d'aliment de créosol, jusqu'à environ 2 mg/kg de déca-,undéca- et/ou dodécalactones, jusqu'à environ 2 mg/kg de ionones et/ou irone, jusqu'à environ 1 mg/kg de gingérol, jusqu'à environ 1 mg/kg de pipérine, jusqu'à 1 mg/kg de propylidène- et/ou butylidène-phtalides, jusqu'à environ 5 mg/kg de salicylate d'amyle et/ou de benzyle.

4. Composition selon l'une des revendications 1 à 3, dans laquelle l'agent émulsifiant est choisi parmi ceux de nature hydrophile, par exemple les esters polyglycériques d'acides gras tels que de l'acide ricinoléique interstérifiés, les huiles de ricin éthoxylées, les esters des acides gras du propylèneglycol, les saccharo-esters ou saccharo-glycérides, les stéaroyl-lactylates de sodium, potassium ou calcium, les polysorbates tels que monooléate ou ricinoléate de polyoxyéthylènesorbitan, le polyéthylène-glycol, le ricinoléate de glycéryl-polyéthylène-glycol, et/ou les lécithines.

5. Prémix destiné à être incorporé aux aliments pour volaille comportant le mélange de composés actifs d'origine végétale selon la revendication 1 en solution, et l'agent émulsifiant tensioactif, sur un support comprenant des céréales, des éléments protéiniques et un composant minéral, ce support représentant de 30 à 90% dudit prémix.

6. Prémix selon la revendication 5 destiné à être incorporé à une tonne d'aliments pour volaille et comportant de 50 à 200 g de solution dans le propylène-glycol du mélange de composés actifs d'origine naturelle, de 20 à 1000 g d'agent émulsifiant, de 50 à 900 g de céréales et sous-produits, de 20 à 100 g de support protéique, de 50 à 300 g de composant minéral.

7. Utilisation de la composition d'additif alimentaire selon l'une des revendications 1 à 4 pour améliorer la digestibilité des aliments pour volaille.

8. Aliment pour volaille destiné à réduire les effets négatifs de la coccidiose et contenant à titre d'ingrédient actif non médicamenteux la composition d'additif alimentaire selon l'une des revendications 1 à 4.

9. Aliment pour volaille selon la revendication 8, dans lequel ladite composition d'additif est incorporée sous la forme d'un prémix selon la revendication 5 à raison de 0,02 à 0,2 %.

## Claims

1. A non medicinal composition of feed additives for poultry including a mixture of cresols, guaiacol, thymol, anethole, eugenol, capsaicin, and tannin, in combination with an emulsifying surfactant.

2. A composition according to claim 1, including per kg of feed, 1 to 5 mg of cresols, 1 to 5 mg of guaiacol, 5 to 20 mg of thymol, 0,5 to 5 mg of anethole, 1 to 5 mg of eugenol, 0,1 to 2 mg of capsaicin and 1 to 20 mg of tannin, as well as 20 to 1000 mg of an emulsifying surfactant.

3. A composition according to claim 2, including furthermore, per kg of feed, up to about 0,5 mg of creosol, up to about 2 mg of deca-, un-deca, and/or dodecalactones, up to about 2 mg of ionones and/or irone, up to about 1 mg of gingerol, up to about 1 mg of piperidine, up to about 1 mg of propylidene and/or butylidene phtalides, up to about 5 mg of amyl and/or benzyl salicylate.

4. A composition according to one of claims 1 to 3, in which the emulsifying agent is selected from those of a hydrophilic nature, for example polyglycerol esters of fatty acids, such as interesterified ricinoleic acid, ethoxylated castor oils, propylene glycol esters of fatty acids, saccharo-esters or saccharo-glycerides, sodium, potassium or calcium stearoyl-lactylates, polysorbates such as polyoxyethylene-sorbitan mono-oleates or ricinoleates, polyethylene glycol, glyceryl-polyethylene-glycol ricinoleate and/or lecithins.

5. A premix designed for incorporation into poultry feeds including the mixture of active components of vegetal origin according to claim 1 in solution, and an emulsifying surfactant, on a support comprising cereals, proteinic components and a mineral component, this support representing 30 to 90% of said premix.

6. A premix according to claim 5 designed for incorporation into a ton of poultry feed and comprising 50 to 200 g of a propylene- glycol solution of the mixture of active compounds of natural origin, 20 to 1000 g of an emulsifying agent, 50 to 900 g of cereals and by-products, 20 to 100 g of proteinic support and 50 to 300 g of mineral component.

7. The use of the composition of a feed additive according to one of claims 1 to 4 for improving the digestibility of poultry feeds.

8. A poultry feed designed for reducing the negative effects of coccidiosis and containing, as a non medicinal active ingredient, the composition of feed additive according to one of claims 1 to 4.

9. A poultry feed according to claim 8, in which said composition of feed additive is incorporated in the form of a premix according to claim 5, in the proportion of 0.02 to 0.2%.

## Patentansprüche

1. Nichtarzneiliche Futterzusatzzusammensetzung für Geflügel aus einem Gemisch von Kresolen, Guajakol, Thymol, Anethol, Eugenol, Capsaicin und Tannin in Verbindung mit einem grenzflächenaktiven Emulgator.

2. Zusammensetzung gemäss Anspruch 1 mit 1 bis 5 mg/kg Futter an Kresolen, 1 bis 5 mg/kg an Guajakol, 5 bis 20 mg/kg an Thymol, 0,5 bis 5 mg/kg an Anethol, 1 bis 5 mg/kg an Eugenol, 0,1 bis 2 mg/kg an Capsaicin und 1 bis 20 mg/kg an Tannin sowie 20 bis 1000 mg/kg an grenzflächenaktivem Emulgator.

3. Zusammensetzung gemäss Anspruch 2, zusätzlich mit bis etwa 0,5 mg/kg Futter an Kreosol, bis etwa 2 mg/kg an Deca-, Undeca- und/oder Dodecalactonen, bis etwa 2 mg/kg an Jononen und/oder Ironen, bis etwa 1 mg/kg an Gingerol, bis etwa 1 mg/kg an Piperin, bis etwa 1 mg/kg an Propyliden- und/oder Butylidenphthaliden und bis etwa 5 mg/kg an Amyl- und/oder Benzylsalicylat.

4. Zusammensetzung gemäss einem der Ansprüche 1 bis 3, worin der Emulgator unter denen hydrophiler Natur ausgewählt wurde, zum Beispiel den umgeesterten Polyglycerinestern von Fettsäuren wie der Ricinolsäure, den ethoxylierten Ricinusölen, den Fettsäureestern von Propylenglykol, den Glucarsäureestern oder Glucarsäureglyceriden, den Stearoyllactylaten von Natrium, Kalium oder Calcium, den Polysorbaten wie den, Monooleat oder Ricinoleat von Polyoxyethylensorbitan, dem Polyethylenglykol, dem Ricinoleat von Glycerin-polyethylenglykol und/oder den Lecithinen.

5. Für die Beimengung zu Geflügelfutter bestimmte Vormischung mit dem Gemisch aktiver Verbindungen pflanzlichen Ursprungs gemäss Anspruch 1 in Lösung sowie mit dem grenzflächenaktiven Emulgator auf einem Träger mit Getreide, Eiweissbestandteilen und einer Mineralkomponente, wobei dieser Träger zwischen 30 und 90 % der benannten Vormischung darstellt.

6. Für die Beimengung zu einer Tonne von Geflügelfutter bestimmte Vormischung gemäss Anspruch 5 mit 50 bis 200 g des Gemischs aktiver Verbindungen pflanzlichen Ursprungs in Propylenglykollösung, 20 bis 1000 g des Emulgators, 50 bis 900 g Getreide und Nebenprodukten, 20 bis 100 g Eiweissträger und 50 bis 300 g einer Mineralkomponente.

7. Verwendung der Futterzusatzzusammensetzung gemäss einem der Ansprüche 1 bis 4 zur Verbesserung der Verdaulichkeit von Geflügelfutter.

8. Zur Verminderung der negativen Wirkungen der Kokzidiose bestimmtes Geflügelfutter mit der Futterzusatzzusammensetzung gemäss einem der Ansprüche 1 bis 4 als nichtarzneilichem, aktivem Inhaltsstoff.

9. Geflügelfutter gemäss Anspruch 8, worin die benannte Zusatzzusammensetzung in Gestalt einer Vormischung gemäss Anspruch 5 in Anteilen von 0,02 bis 0,2 % zugesetzt wird.
